Europäisches Patentamt

European Patent Office

Office européen des brevets

(11) Veröffentlichungsnummer: **0 279 306**
**A2**

(12) **EUROPÄISCHE PATENTANMELDUNG**

(21) Anmeldenummer: 88101775.0

(22) Anmeldetag: 08.02.88

(51) Int. Cl.⁴: **B29C 65/02** , B29C 65/10

(30) Priorität: **17.02.87 CH 588/87**

(43) Veröffentlichungstag der Anmeldung:
**24.08.88 Patentblatt 88/34**

(84) Benannte Vertragsstaaten:
**AT BE CH DE FR GB IT LI LU NL SE**

(71) Anmelder: **Meistermatic AG**
**Sihlbruggstrasse 148**
**CH-6340 Baar(CH)**

(72) Erfinder: **Meister, Anton**
**Hochhaus**
**CH-6060 Sarnen(CH)**

(74) Vertreter: **Kägi, Otto**
**Postfach 201**
**CH-6330 Cham(CH)**

(54) **Grossflächen-Schweissautomat für Kunststoffolien.**

(57) Zwecks einwandfreier, dichter Verschweissung überlappender Folienränder (R1, R2) auch beim Ueberfahren von Unebenhneiten sind am fahrenden, L-förmigen Maschinenrahmen (1) eine Andrückrolle (20) und zwei Fahrrollen (26) synchron angetrieben (Fahrmotor 10, Zahnriemen 13). Die Fahrrollen (26) sind zur Spur der Andrückrolle (20) seitlich versetzt, wodurch eine Schiefstellung der Andrückrolle auch bei grösseren Foliendicken unterbleibt. Eine vor der Andrückrolle (20) mitlaufende Heizdüse (5) greift zwischen die Folienränder (R1, R2) und bildet eine Tasche (T), zu deren seitlichem Abschluss ein Niederhalter (30) dient. Dieser weist einen in Fahrrichtung (P) umlaufenden, auf den Folienrändern abrollenden Andrückriemen (33) auf, ist mit vertikalem Spiel am Rahmen (1) gelagert und von der Andrückrolle (20) her angetrieben.

FIG 1

## Grossflächen-Schweissautomat für Kunststoffolien

Die Erfindung betrifft einen Grossflächen-Schweissautomat für Kunststoffolien, die mit überlappenden Rändern ausgelegt sind, mit einem in Richtung der Folienkanten auf Rollen fahrbaren Maschinenrahmen, einer mitlaufenden, vor einer Andrückrolle zwischen die Folienränder greifenden Heizdüse sowie neben der Heizdüse angeordneten, die Folienränder zusammendrückenden Niederhaltemitteln.

Mit Einrichtungen dieser Art lassen sich grossflächig ausgelegte Folienbahnen miteinander verschweissen, wie sie häufig zur Isolation bzw. zum Abdichten von Dächern, Böden oder Wänden an Gebäuden verwendet werden. Durch die Heizdüse wird in dem der Andrückrolle vorangehenden Schweissbereich eine "Tasche" zwischen den überlappenden Folienrändern gebildet, in die zum Aufschmelzen der Folienoberflächen Heissluft eingeblasen wird; diese Tasche soll seitlich durch die mitgeführten Niederhaltemittel begrenzt und geschlossen werden. Bei bekannten Maschinen dieser Art ergeben sich Schwierigkeiten einerseits dadurch, dass besonders bei dickeren Folien die Andrückrolle infolge Schiefstellung des Maschinenrahmens nicht mit der ganzen Rollenbreite satt aufliegt. Sodann wurden sowohl angetriebene wie auch lose Rollen am Maschinenrahmen vorgesehen, wodurch es während der Fahrt der Maschine häufig zum Aufstauchen und zu Wellenbildung zwi schen den Folienrändern kam. Ausserdem wurden die satte Auflage der Maschine und insbesondere der Abschluss der "Tasche" durch die Niederhaltemittel beim Ueberfahren von Unebenheiten oft gestört; dadurch ist ein sicheres Verschweissen nicht gewährleistet, vor allem besteht Gefahr, dass bei seitlich nicht dicht geschlossener "Tasche" Heissluft unter die eine Folienbahn geblasen wird, wodurch diese angehoben werden kann.

Aufgabe der Erfindung ist es, einen Schweissautomaten der obengenannten Art so zu gestalten, dass ein zuverlässiges Arbeiten mit einwandfreier, völlig dichter Verschweissung und ohne Stauchung oder Wellenbildung der Folien gewährleistet ist. Diese Aufgabe wird erfindungsgemäss dadurch gelöst, dass die Andrückrolle und zwei in Fahrrichtung voranlaufende Fahrrollen synchron angetrieben sind, wobei die Fahrrollen zur Spur der Andrückrolle seitlich versetzt gelagert sind, und dass ein Niederhalter mit einem in Fahrrichtung umlaufenden, auf den Folienrändern abrollenden Andrückriemen vorhanden ist. Dadurch wird erreicht, dass unabhängig von der Foliendicke und auch bei Unebenheiten die Andrückrolle wie auch der Niederhalter dauernd satt anliegen und jegliche Verschiebung der Folien in deren Ebene unterbleibt.

Weitere Merkmale und Vorteile der Erfindung ergeben sich aus den Ansprüchen 2 bis 11. Nachstehend wird ein Ausführungsbeispiel des erfindungsgemässen Schweissautomaten im Zusammenhang mit der Zeichnung näher erläutert.

Fig. 1 ist eine Draufsicht auf den Automaten, wobei der Maschinenrahmen strichpunktiert eingezeichnet und verschiedene darauf angeordnete Teile nur schematisch angedeutet sind,

Fig. 2 ist ein Vertikalschnitt entlang der Linie II - II in Fig. 1,

Fig. 3 ist eine teilweise geschnittene Ansicht des Niederhalters in Richtung des Pfeiles III in Fig. 1, und

Fig. 4 ist die Draufsicht des Niederhalters nach Fig. 3.

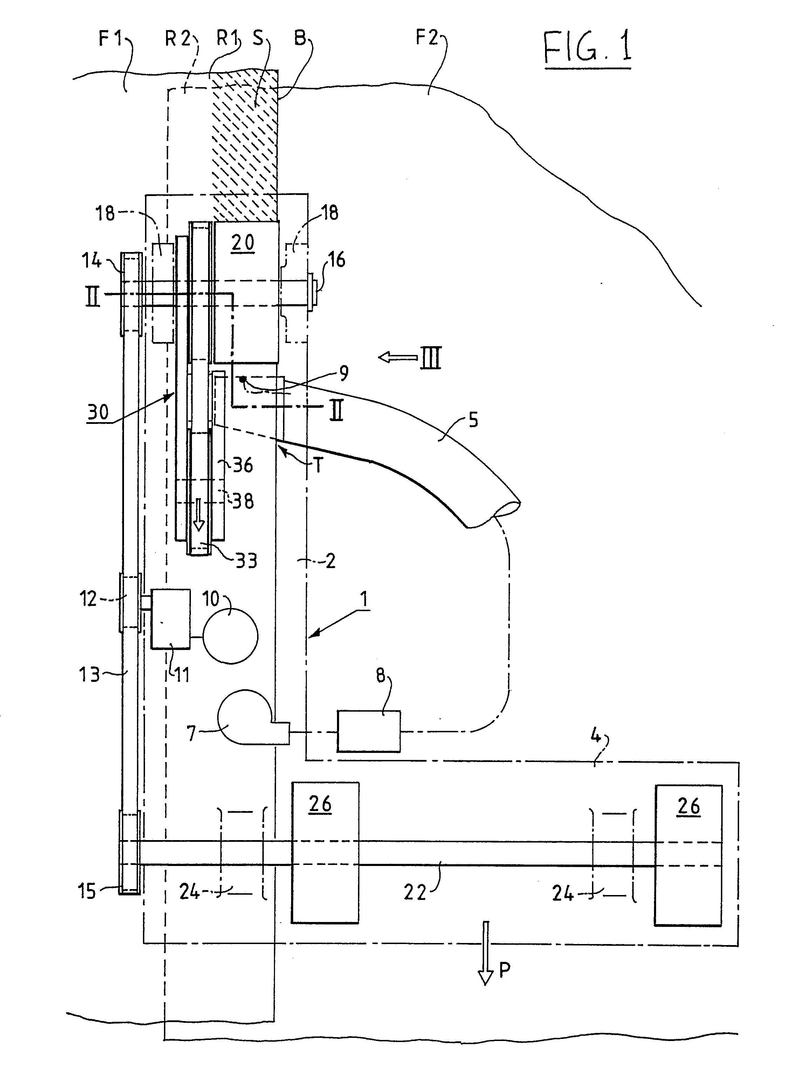

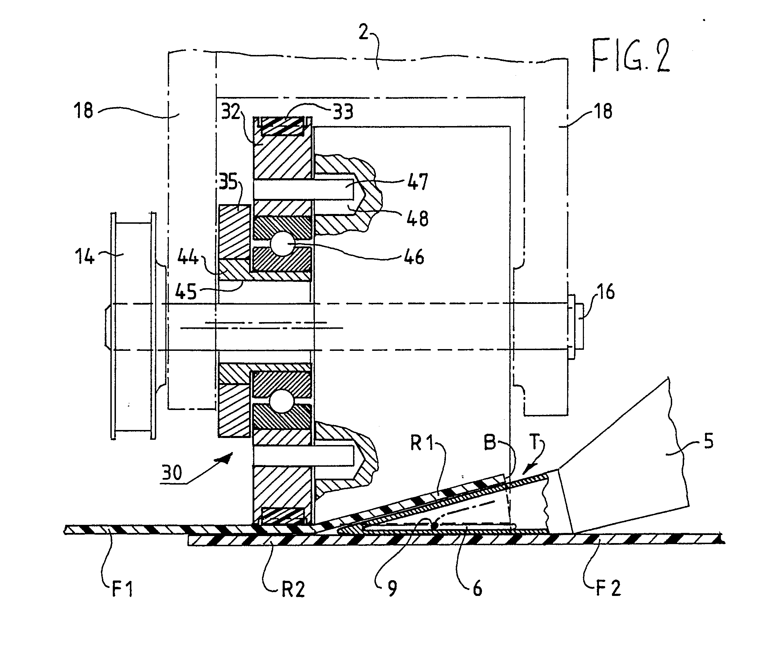

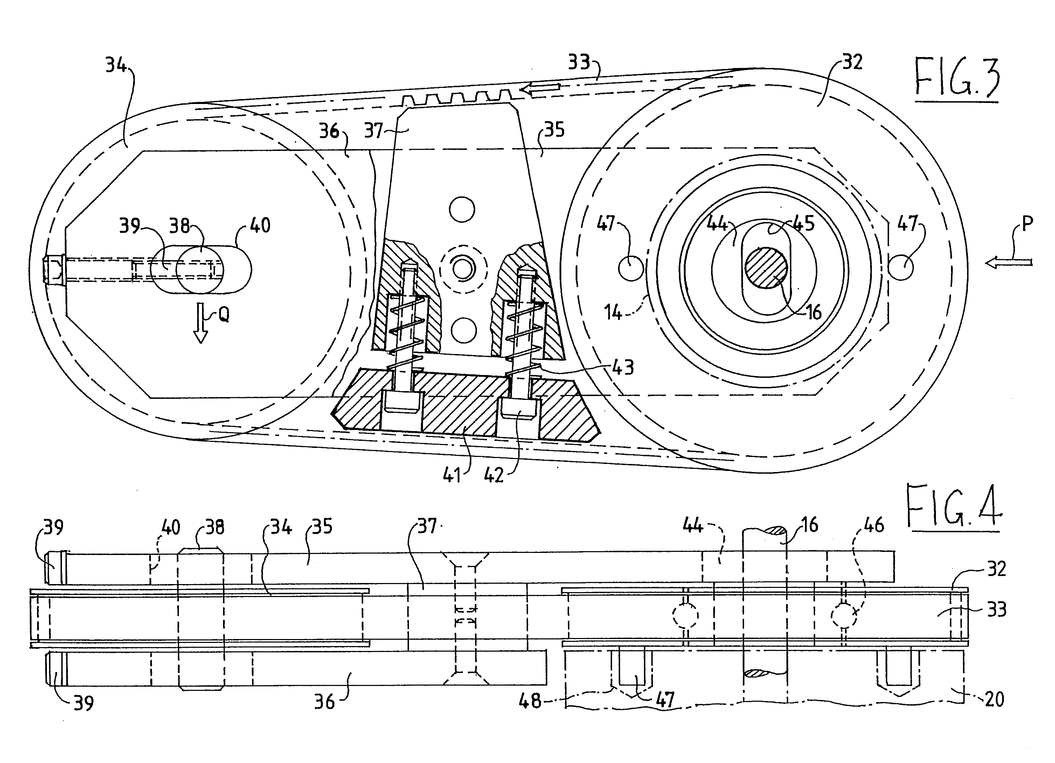

In den Figuren 1 und 2 sind die nebeneinander ausgebreiteten Kunststoffolien F1 und F2 dargestellt, die entlang den überlappenden Rändern R1 und R2 in einer Zone S mit Hilfe des Schweissautomaten nach Fig. 1 zu verschweissen sind. Während dem Schweissvorgang fährt der Automat in Richtung des Pfeiles P, d.h. parallel zur Folienkante B. Der fahrbare Maschinenrahmen 1 ist im wesentlichen L-förmig, d.h. er weist einen sich in Fahrrichtung erstreckenden Schenkel 2 und einen dazu querstehenden Schenkel 4 auf. An der Unterseite des Maschinenrahmens 1 sind Rollen 20 bzw. 26 wie folgt gelagert: Eine Antriebswelle 16 für die Andrückrolle 20 ist am nachlaufenden Ende des Schenkels 2 in zwei Lagern 18 geführt, und am Schenkel 4 verläuft parallel zur Welle 16 die in Lagern 24 geführte Antriebswelle 22 für zwei Fahrrollen 26; die Rollen 20, 26 sind mit ihren Antriebswellen 16 bzw. 22 jeweils drehfest verbunden. Auf der Welle 16 sitzt eine Zahnscheibe 14 und auf der Welle 22 eine Zahnscheibe 15. Ueber beide Zahnscheiben 14 und 15 läuft ein Zahnriemen 16, und mit diesem steht ein Zahnrad 12 im Eingriff, welches von dem auf dem Maschinenrahmen befestigten Fahrmotor 10 über ein Getriebe 11 angetrieben wird. Auf diese Weise sind die Andrückrolle 20 und die beiden in Fahrrichtung P voranlaufenden Fahrrollen 26 synchron angetrieben. Die Anordnung der Rollen ist dabei so, dass beide Fahrrollen 26 zur Spur der Andrückrolle 20 seitlich versetzt sind, d.h. neben der Folienkante B einzig auf der Folie F2 aufliegen. Dadurch ist eine Schiefstellung infolge der Foliendicke ausgeschlossen, und ausserdem können die Folien auch nicht in Fahrrichtung gegeneinander aufgestaucht werden.

In an sich bekannter Weise ist der Schweissautomat mit einer mitlaufenden Heizdüse 5 versehen.

Diese wird von einem auf dem Maschinenrahmen befestigten Gebläse 7 über ein Heizaggregat 8 mit Heissluft versehen. Die Düse 5 ist auf dem Maschinenrahmen 1 schwenkbar gelagert (nicht dargestellt) und greift im Betrieb vor der Andrückrolle 20 zwischen die Folienränder R1 und R2, wodurch eine Tasche T gebildet wird, in welche die Heissluft zum Aufschmelzen der Folienoberfläche eingeblasen wird. Die Hauptaustrittsöffnung der Düse ist als Schlitz 6 ausgebildet, der gegen die Andrückrolle 20 gerichtet ist (weitere, kleine und nicht dargestellte Düsenöffnungen können zwecks Luftführung, Reibungsverminderung usw. vorgesehen sein). Im Bereich des Düsenschlitzes 6 ist ein Temperaturfühler 9 angeordnet, welcher über einen Regler (nicht dargestellt) das Heizaggregat 8 zwecks Konstanthaltung bzw. Regelung der Heiztemperatur beeinflusst. Die in der Tasche T aufgeschmolzenen Folienbereiche werden anschliessend von der Andrückrolle 20 überfahren und zusammengedrückt, wodurch die verschweisste Zone S in der Breite der Andrückrolle gebildet wird.

Seitlich neben der Heizdüse 5 befindet sich ein ebenfalls in Fahrrichtung P mitlaufender Niederhalter 30. Es ist wichtig, dass der Niederhalter so beschaffen ist, dass er durch Zusammendrücken der überlappenden Folienränder die Tasche T seitlich gut verschliesst, ohne jedoch während des Vorschubs nennenswerte Kräfte in der Folienebene auszuüben, die ein Verschieben der Folien bewirken könnten. Aufbau, Lagerung und Antrieb des Niederhalters 30 gehen im wesentlichen aus den Figuren 2 bis 4 hervor:

Der Niederhalter 30 weist einen über zwei Riemenscheiben 32, 34 umlaufenden Andrückriemen 33, vorzugsweise einen Zahnriemen, auf, dessen unteres Trum in Fahrrichtung auf den überlappenden Folienrändern R1, R2 rollt. Zur Lagerung der Riemenscheiben 32 und 34 dient eine lange Seitenplatte 35 und eine kurze Seitenplatte 36, welche Platten über einen Mittelsteg 37 verbunden, z.B. verschraubt und verstiftet sind. Eine Achse 38, auf der die Riemenscheibe 34 lose dreht, ist in horizontalen Längsschlitzen 40 der Seitenplatten 35 und 36 geführt und mittels Spannschrauben 39 gehalten. Mit Hilfe der Spannschrauben 39 lässt sich die geeignete Spannung des Andrückriemens 33 einstellen. Am andern Ende der langen Seitenplatte 35 ist eine Lagerhülse 44 fest eingesetzt, auf welcher die Riemenscheibe 32 über ein Kugellager 46 gelagert ist. Unterhalb des Mittelsteges 37 befindet sich ein Pressschuh 41, welcher unter der Wirkung von Druckfedern 43 das untere Trum des Andrückriemens 33 belastet, wobei die Stellung des Schuhs 41 mittels Schrauben 42 einstellbar ist.

Der wie beschrieben aufgebaute Niederhalter 30 liegt im wesentlichen durch sein Eigengewicht mit dem unteren Trum des Riemens 33 auf den überlappenden Folienrändern auf. Er wird in Fahrrichtung von der durch die Lagerhülse 44 geführten Welle 16 mitgenommen. Neben der Andrückrolle 20 ist der Niederhalter 30 zwischen den festen Lagern 18 der Welle 16 seitlich gehalten, und zwar so, dass er (im Gegensatz zur Rolle 20) zum Maschinenrahmen 1 ein gewisses vertikales Spiel aufweist. Dies ist dadurch erreicht, dass die Lagerhülse 44 einen Vertikalschlitz 45 aufweist, wodurch die Hülse vertikal beweglich an der Welle 16 geführt ist. Der Andrückriemen 33 bzw. dessen eine Riemenscheibe 32 steht ausserdem mit der Andrückrolle 20 in Antriebsverbindung: Zwei von der Scheibe 32 seitlich abstehende Mitnehmerstifte 47 greifen in entsprechende seitliche Bohrungen 48 an der Andrückrolle 20 ein, und zwar mit ausreichendem Spiel, welches gewisse Relativbewegungen zwischen der Rolle 20 und der Scheibe 32 in radialer wie in Drehrichtung zulässt. Vorzugsweise ist die angetriebene Riemenscheibe 32 etwas grösser (z.B. um die halbe Riemendicke) als die Rolle 20, wie insbesondere aus Fig. 2 ersichtlich ist. Die Rolle 20 und die Scheibe 32 mit dem Riemen 33 liegen unten dauernd bündig auf der Folie F1 auf, wodurch sich eine geringe Höhenverschiebung zwischen der Achse der Rolle 20 und derjenigen der Scheibe 32 einstellt. Bei dieser Anordnung wird das obere Trum des Riemens 33 leicht "voreilend" von der Scheibe 32 angetrieben, und dadurch besteht die Tendenz, dass die in Fahrrichtung voreilende Riemenscheibe 34 dauernd leicht nach unten gedrückt wird (Pfeil Q in Fig. 3). Insgesamt wird dabei ein dauerndes, sattes Anliegen des unteren Riementrums während des Vorschubs des Schweissautomaten erreicht, wodurch der seitliche Verschluss der Tasche T auch beim Ueberfahren von Unebenheiten aufrecht erhalten bleibt. Das untere, die Anpresskraft übertragende Trum des Andrückriemens wälzt sich jedoch völlig schlupffrei genau mit der Fahrgeschwindigkeit des Maschinenrahmens auf der Folie 1 ab.

Die vorerwähnte, L-förmige Gestalt des Maschinenrahmens 1 hat noch den weiteren Vorteil, dass in der Schweisszone etwa entstehende, agressive Rauchgase frei austreten und sich verflüchtigen können. Ausserdem lassen sich der Bereich der Tasche T und die richtige Lage der Andrückrolle 20 zur Folienkante B gut beobachten.

**Ansprüche**

1. Grossflächen-Schweissautomat für Kunststoffolien (F1, F2), die mit überlappenden Rändern (R1, R2) ausgelegt sind, mit einem in Richtung der Folienkanten (B) auf Rollen (20, 26) fahrbaren Maschinenrahmen (1), einer mitlaufende vor einer Andrückrolle (20) zwischen die Folienränder(R1, R2) greifenden Heizdüse (5) sowie neben der Heizdüse (5) angeordneten, die Folienräder (R1, R2) zusammendrückenden Niederhaltemitteln (30), dadurch gekennzeichnet, dass die Andrückrolle (20) und zwei in Fahrrichtung (P) voranlaufende Fahrrollen (26) synchron angetrieben sind, wobei die Fahrrollen (26) zur Spur der Andrückrolle (20) seitlich versetzt gelagert sind, und dass ein Niederhalter (30) mit einem in Fahrrichtung (P) umlaufenden, auf den Folienrändern (R1, R2) abrollenden Andrückriemen (33) vorhanden ist.

2. Schweissautomat nach Anspruch 1, dadurch gekennzeichnet, dass der Niederhalter (30) neben der Andrückrolle (20) mit vertikalem Spiel am Maschinenrahmen (1) gelagert ist.

3. Schweissautomat nach Anspruch 2, dadurch gekennzeichnet, dass der Niederhalter (30) an der Antriebswelle (16) der Andrückrolle (20) mit einem Vertikalschlitz (45) geführt ist.

4. Schweissautomat nach einem der Ansprüche 1 bis 3, dadurch gekennzeichnet, dass der über zwei Riemenscheiben (32, 34) geführte Andrückriemen (33) mit der Andrückrolle (20) in Antriebsverbindung steht.

5. Schweissautomat nach Anspruch 4, gekennzeichnet durch mit Spiel ineinandergreifende Mitnahmeorgane (47, 48) zwischen der einen Riemenscheibe (32) und der Andrückrolle (20).

6. Schweissautomat nach Anspruch 5, dadurch gekennzeichnet, dass die angetriebene Riemenscheibe (32) etwas grösser ist als die Andrückrolle.

7. Schweissautomat nach einem der vorangehenden Ansprüche, dadurch gekennzeichnet, dass der Andrückriemen (33) ein Zahnriemen ist.

8. Schweissautomat nach einem der vorangehenden Ansprüche, dadurch gekennzeichnet, dass das untere Trum des Andrückriemens (33) von einem federnd gelagerten Pressschuh (41) belastet ist.

9. Schweissautomat nach Anspruch 1, dadurch gekennzeichnet, dass eine Antriebswelle (16) für die Andrückrolle (20) und eine Antriebswelle (22) für die Fahrrollen (26) über einen Zahnriemen (13) verbunden sind, welcher von einem Fahrmotor (10) angetrieben ist.

10. Schweissautomat nach Anspruch 1, dadurch gekennzeichnet, dass der Maschinenrahmen (1) L-förmig ist, wobei der eine, sich in Fahrrichtung (P) erstreckende Schenkel (2) die Andrückrolle (20) und der andere, querstehende Schenkel (4) die beiden Fahrrollen (26) lagert.

11. Schweissautomat nach Anspruch 1, dadurch gekennzeichnet, dass die Austrittsöffnung (6) der Heizdüse (5) mit einem Temperaturfühler (9) zur Regelung der Heiztemperatur versehen ist.

FIG. 1

M 101 I

FIG.2

FIG.3

FIG.4